# EUROPÄISCHE PATENTANMELDUNG

(11) **EP 4 461 609 A1**
(43) Veröffentlichungstag der Anmeldung: **13.11.2024**
(21) Anmeldenummer: 24172085.3
(22) Anmeldetag: 24.04.2024
(51) Int. Cl.: B60T 13/68, B60T 8/32, B60T 8/34

(54) **BREMSMODUL**

(30) Priorität: 12.05.2023 DE 102023204486
(71) Anmelder: KNORR-BREMSE Systeme für Nutzfahrzeuge GmbH, 80809 München (DE)
(72) Erfinder: Niedermeier, Stefan, 94542 Haarbach (DE); Ulrich, Niklas, 11360 Stockholm (SE); Krahl, Martin, 71640 Ludwigsburg (DE); Wetterer, Stefan, 80339 München (DE)

(57) **Zusammenfassung**

Ein erfindungsgemäßes Bremssteuermodul (1) weist auf:
ein erstes Bremssteuerventil (2), dessen Ausgang mit mindestens einem geregelten Anschluss (21, 22) verbunden ist;
ein zweites Bremssteuerventil (3), dessen Ausgang mit einem dritten geregelten Anschluss (23) verbunden ist;
ein drittes Bremssteuerventil (4), dessen Ausgang mit einem vierten geregelten Anschluss (25) verbunden ist;
eine Prozessoreinheit (5), welche dazu angepasst ist, Bremsdrücke zu regeln und/oder zu beeinflussen;
mindestens einen Steueranschluss (41, 42), welcher dazu angepasst ist, mindestens eines der Bremssteuerventile (2, 3, 4) anzusteuern;
wobei das erste Bremssteuerventil (2) mit einem ersten Druckluftversorgungs-Anschluss (11) verbunden ist,
und das zweite Bremssteuerventil (3) und das dritte Bremssteuerventil (4) mit einem zweiten Druckluftversorgungs-Anschluss (12) verbunden sind.

Das Bremssteuermodul (1) erlaubt die Ansteuerung der Bremszylinder von Vorderachse und Hinterachse. Es ist aber lediglich eine Prozessoreinheit (5) nötig, dieser ist im zentralen Bremssteuermodul (1) vorhanden. Ferner entfällt ein Großteil des Verkabelungsaufwands.

## Beschreibung

Die vorliegende Anmeldung befasst sich mit einem Bremsmodul, insbesondere zur Realisierung eines elektronischen Bremssystems für Nutzfahrzeuge.

Elektronische Bremssysteme spielen heutzutage eine immer größere Rolle.

In der Regel sind hier elektronische Bremsanforderungen vorhanden, insbesondere kann so durch ein Stabilitätsprogramm für eine entsprechende Bremsstabilität gesorgt werden.

Im Stand der Technik ist das Dokument DE 10 2009 009 811 A1 bekannt, dieses offenbart ein elektropneumatisches Druckregelmodul mit pneumatisch kreisgetrennten Druckregelkanälen.

Dieses eignet sich insbesondere für elektropneumatische Bremsanlagen von Fahrzeugen mit mindestens zwei getrennt regelbaren Druckregelkanälen, wobei für jeden Druckregelkanal auf der Basis einer von wenigstens einem Druckluftvorrat stammenden Arbeitsluft abhängig von Bremsanforderungssignalen eines Bremswertgebers ein geregelter, an wenigstens einem Arbeitsdruckanschluss anstehender Arbeitsdruck für wenigstens eine Bremszuspanneinrichtung der Bremsanlage erzeugt wird. Hier ist in jedem Druckregelkanal wenigstens ein eigener an einen eigenen Druckluftvorrat anschließbarer Vorratsdruckanschluss zugeordnet ist, wobei die pneumatischen Strömungswege eines jeden Druckregelkanals zumindest, ausgehend von dem jeweiligen Vorratsdruckanschluss bis zu dem jeweiligen Arbeitsdruckanschluss, von den pneumatischen Strömungswegen eines jeweils anderen Druckregelkanals pneumatisch getrennt ausgebildet ist.

In der üblichen Bremssystemarchitektur ist also ein Ein-Kanal-Druckregler für die Vorderachse und ein Zwei-Kanal-Druckregler für die Hinterachse vorgesehen, das heißt beide Bremszylinder der Vorderachse werden über einen Druckregler geregelt, und an der Hinterachse wird jeweils jeder Bremszylinder auf jeder Seite durch einen eigenen Druckregler geregelt. Im Stand der Technik ist meistens ein Modul mit zwei Kanälen für die Hinterachse vorgesehen, und ein weiteres Modul mit einem Kanal für die Vorderachse. Für die Realisierung eines elektronischen Bremssystems, werden also häufig drei Druckregelkanäle realisiert.

Zur Realisierung einer besseren und seitenweisen ABS Regelung werden üblicherweise zwischen 1-Kanal-Druckregelmodul an der Vorderachse und Vorderachs-Bremszylindern ABS Druckregelmodule installiert, 1 je Rad, die den Druck radweise halten oder ablassen können und somit 2 pneumatische Kanäle an der Vorderachse realisiert werden.

Dies bedeutet allerdings Verkabelungsaufwand, da zwischen den einzelnen Bremssteuerventilen (Druckreglern) eine Kommunikation stattfinden muss. Dies geht entweder mit der Verwendung einer Vielzahl von Kabeladern einher oder mit zusätzlicher Elektronik für digitale Kommunikation zwischen den Komponenten.

Es ist daher eine Aufgabe der vorliegenden Erfindung, ein kompaktes Bremssteuermodul bereitzustellen, von welchem die Bremszylinder an der Vorderachse und Hinterachse regelbar sind.

Diese Aufgabe wird gelöst von einem Bremssteuermodul gemäß Anspruch 1 sowie einem Bremssystem gemäß Anspruch 11. Weitere vorteilhafte Ausgestaltungen der vorliegenden Erfindung sind Gegenstand der Unteransprüche.

Ein erfindungsgemäßes Bremssteuermodul weist auf:
ein erstes Bremssteuerventil, dessen Ausgang mit einem mindestens einem geregelten Anschluss verbunden ist (erster und/oder zweiter geregelter Anschluss);
ein zweites Bremssteuerventil, dessen Ausgang mit einem dritten geregelten Anschluss verbunden ist;
ein drittes Bremssteuerventil, dessen Ausgang mit einem vierten geregelten Anschluss verbunden ist;
eine Prozessoreinheit, welche dazu angepasst ist, Bremsdrücke zu regeln und/oder zu beeinflussen;
mindestens einen Steueranschluss, welcher dazu angepasst ist, mindestens eines der Bremssteuerventile anzusteuern;
wobei das erste Bremssteuerventil mit mindestens einem ersten Druckluftversorgungs-Anschluss verbunden ist,
und das zweite Bremssteuerventil und das dritte Bremssteuerventil mit mindestens einem zweiten Druckluftversorgungs-Anschluss verbunden sind.

So ist ein Modul mit mindestens drei Ventilen in einer Baueinheit mit aktiver Elektronik zur Steuerung oder Regelung individueller Ausgangsdrücke je Bremssteuerventil vorhanden. Dadurch, dass mindestens zwei getrennte Druckluftversorgungs-Anschlüsse vorhanden sind, können zwei Kreise voneinander getrennt werden, so dass bei Druckverlust des einen Kreises der Druck des anderen Kreises erhalten bleibt, und somit auch die Funktion des anderen Kreises erhalten bleiben kann. Das erste Bremssteuerventil besitzt mindestens einen geregelten Anschluss, dieser eignet sich zu dem Anschluss der Bremszylinder der Vorderachse. Für die Hinterachse ist für jede Seite ein eigenes Bremssteuerventil vorgesehen, also das zweite Bremssteuerventil und das dritte Bremssteuerventil. So ist lediglich eine aktive Prozessoreinheit (beispielsweise ein Mikrocontroller) nötig, dieser ist im Bremsmodul, welches zentral vorgesehen ist, vorhanden (als Rückfallebene kann aber noch ein zweiter redundanter Microcontroller vorgesehen sein). Ferner entfällt der Verkabelungsaufwand zwischen den einzelnen Bremssteuerventilen (Druckreglern), welcher im Stand der Technik vorhanden ist.

Vorzugsweise weist der Ausgang des ersten Bremssteuerventils einen ersten und zweiten geregelten Anschluss auf. So ist für jeden Bremszylinder der Vorderachse ein Anschluss vorhanden, ohne dass hier externe Verteiler oder Ähnliches notwendig wären.

Vorzugsweise ist das erste Bremssteuerventil mit einem ersten Steueranschluss verbunden, das zweite Bremssteuerventil und das dritte Bremssteuerventil sind mit einem zweiten Steueranschluss verbunden.

So kann realisiert werden, dass Vorderachse und Hinterachse getrennt gesteuert werden können - beispielsweise durch Drucksignale eines Fußbremsmoduls.

Alternativ kann auch nur ein Steueranschluss vorhanden sein, aber intern unterschiedliche Steuerdrücke je Bremssteuerventil erzeugt werden.

Vorzugsweise sind alle Komponenten des Bremssteuermoduls in einem Gehäuse untergebracht. Dies minimiert den Verkabelungsaufwand noch weiter und sorgt ferner für eine kompakte Bauweise.

Vorzugsweise sind das erste Bremssteuerventil, das zweite Bremssteuerventil und/oder das dritte Bremssteuerventil jeweils als Relaisventil ausgebildet. Relaisventile sind besonders vorteilhaft für die Anwendung als Bremssteuerventile.

Vorzugsweise ist der erste geregelte Anschluss dazu angepasst, mit einem ersten Bremszylinder, welcher links an der Vorderachse eines Fahrzeugs vorgesehen ist, verbunden zu werden, und/oder der zweite geregelte Anschluss ist dazu angepasst, mit einem zweiten Bremszylinder, welcher rechts an der Vorderachse eines Fahrzeugs vorgesehen ist, verbunden zu werden, und/oder der dritte geregelte Anschluss ist dazu angepasst, mit einem dritten Bremszylinder, welcher links an der Hinterachse eines Fahrzeugs vorgesehen ist, verbunden zu werden, und/oder der vierte geregelte Anschluss ist dazu angepasst, mit dem vierten Bremszylinder, welcher rechts an der Hinterachse eines Fahrzeugs vorgesehen ist, verbunden zu werden. So sind sämtliche Anschlüsse für den Bremsdruck am Bremssteuermodul vorhanden, dieses kann an einer beliebigen Stelle im Fahrzeug verbaut werden, beispielsweise also dort, wo Platz für ein solches Modul vorhanden ist.

Weiter vorzugsweise weist das Bremssteuermodul einen fünften geregelten Anschluss auf, welcher mit dem Ausgang des zweiten Bremssteuermoduls verbunden ist, und der fünfte geregelte Anschluss ist dazu angepasst, mit einem weiteren Bremszylinder, welcher links an einer weiteren Hinterachse eines Fahrzeugs vorgesehen ist, verbunden zu werden. Ferner weist das Bremssteuermodul vorzugsweise einen sechsten geregelten Anschluss auf, welcher mit dem Ausgang des dritten Bremssteuerventils verbunden ist, wobei der sechste geregelte Anschluss dazu angepasst ist, mit einem weiteren Bremszylinder, welcher rechts an einer weiteren Hinterachse eines Fahrzeugs vorgesehen ist, verbunden zu werden. So sind auch zwei Hinterachsen ansteuerbar.

Vorzugsweise weist das erste Bremssteuerventil eine elektrisch betätigte Vorsteuerventilbaugruppe auf, und/oder das zweite Bremssteuerventil weist vorzugsweise eine zweite elektrisch betätigte Vorsteuerventilbaugruppe auf, und/oder das dritte Bremssteuerventil weist vorzugsweise eine dritte elektrisch betätigte Vorsteuerventilbaugruppe auf. Somit sind je Bremssteuerventil eins oder mehrere elektrisch betätigte Vorsteuerventile vorhanden- welche als Aktuatoren für die Elektronik dienen, und so einzelne Eingriffe bis hin zur ausnahmslosen elektronischen Kontrolle der Bremsdrücke ermöglichen. Diese dienen dazu die Fahrzeugstabilität zu verbessern, den Fahrkomfort zu erhöhen und den Verschleiß der Bremsanlage zu reduzieren.

Weiter vorzugsweise ist am ersten Bremssteuerventil ein erster Drucksensor vorgesehen, welcher dazu angepasst ist, den durch das erste Bremssteuerventil ausgesteuerten Druck zu messen. Weiter vorzugsweise ist am zweiten Bremssteuerventil ein zweiter Drucksensor vorgesehen, welcher dazu angepasst ist, den durch das zweite Bremssteuerventil ausgesteuerten Druck zu messen. Weiter vorzugsweise ist am dritten Bremssteuerventil ein dritter Drucksensor vorgesehen, welcher dazu angepasst ist, den durch das dritte Bremssteuerventil ausgesteuerten Druck zu messen. Ferner ist vorzugsweise im Bremssteuermodul mindestens ein Beschleunigungs- und Drehratensensor vorgesehen.

Mit Daten der Drucksensoren kann durch den Mikrocontroller eine feine Regelung der Bremsdrücke realisiert werden. Durch Daten der Drehraten- und Beschleunigungsensoren wird für Realisierung weiterer Bremsfunktionen benötigt.

Vorzugsweise ist ferner ein dritter Druckluftversorgungs-Anschluss vorgesehen, und der erste Druckluftversorgungs-Anschluss sowie der dritte Druckluftversorgungs-Anschluss sind über ein Druckauswahlventil mit dem ersten Bremssteuerventil verbunden. So kann ein dritter Druckluftkreis vorgesehen werden, und beim Ausfall der Versorgung mit Druckluft vom ersten Anschluss, einspringen (beispielsweise durch ein Leck), so dass das erste Bremsssteuerventil nie ohne Versorgungsdruck bleibt. Vorzugsweise ist das Druckauswahlventil ein Select-High-Ventil, welches denjenigen Druckluftversorgungs-Anschluss mit dem ersten Bremssteuerventil verbindet, an welchem ein höherer Druck anliegt. Wenn ein Druckverlust am ersten Druckluftversorgungs-Anschluss auftritt, wird somit ein Hilfskreis ausgewählt, und die Vorderachse bleibt nicht ungebremst.

Ein erfindungsgemäßes Bremssystem weist auf:
ein Bremssteuermodul wie oben beschrieben;
wobei mindestens ein Steueranschluss mit einem Fußbremsmodul verbunden ist;
wobei der erste geregelte Anschluss über ein erstes ABS-Ventil mit einem ersten Bremszylinder verbunden ist;
wobei der zweite geregelte Anschluss über ein zweites ABS-Ventil mit einem zweiten Bremszylinder verbunden ist;
wobei der dritte geregelte Anschluss mit einem dritten Bremszylinder verbunden ist;
wobei der vierte geregelte Anschluss mit einem vierten Bremszylinder verbunden ist;
wobei der erste Bremszylinder und der zweite Bremszylinder einer Vorderachse eines Fahrzeugs zugeordnet sind, und
wobei der dritte Bremszylinder und der vierte Bremszylinder einer Hinterachse eines Fahrzeugs zugeordnet sind.

Bei einer solchen Architektur ist nur ein Bremssteuermodul notwendig, welches sowohl die Vorderachse als auch die Hinterachse(n) entsprechend steuern kann.

Vorzugsweise jeder Steueranschluss mit einem separaten Fußbremsventil des Fußbremsmoduls verbunden.

Im Folgenden werden bevorzugte Ausführungsformen der vorliegenden Erfindung unter Bezugnahme auf die beiliegenden Figuren näher beschrieben.

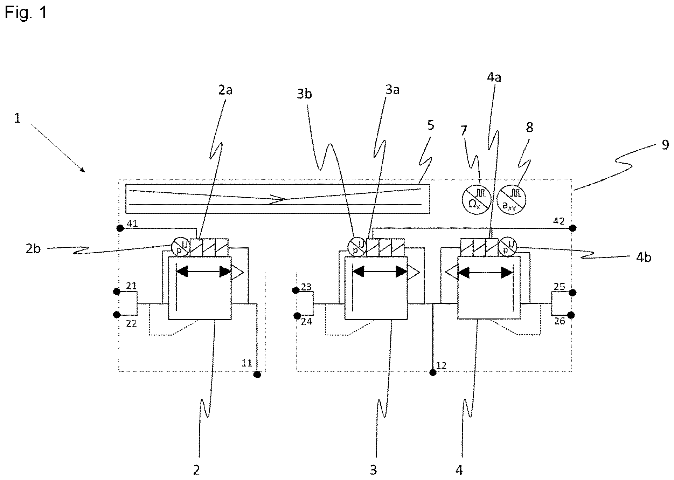

Fig. 1 zeigt ein Schema eines Bremssteuermoduls 1, welches ein erstes Bremssteuerventil 2, zweites Bremssteuerventil 3 sowie ein drittes Bremssteuerventil 4 enthält. Das erste Bremssteuerventil 2 ist mit einem ersten Steueranschluss 41 verbunden, und wird von einem ersten Druckluftversorgungs-Anschluss 11 versorgt. Die Arbeitsanschlüsse des ersten Bremssteuerventils 2 sind ein erster geregelter Anschluss 21 sowie ein zweiter geregelter Anschluss 22. Am ersten Bremssteuerventil 21 ist eine erste Vorsteuerventilgruppe 2a sowie ein erster Drucksensor 2b vorgesehen, der erste Drucksensor 2b misst den ausgesteuerten Arbeitsdruck.

Ferner ist ein zweites Bremssteuerventil 3 vorgesehen, dieses wird zusammen mit einem dritten Bremssteuerventil 4 von einem zweiten Druckluftversorgungs-Anschluss 12 versorgt, und beide sind ferner mit einem zweiten Steueranschluss 42 verbunden. Ferner ist das zweite Bremssteuerventil 3 mit einem dritten geregelten Anschluss 23 sowie einem fünften geregelten Anschluss 24 verbunden, entsprechend ist das dritte Bremssteuerventil 4 mit einem vierten geregelten Anschluss 25 sowie einem sechsten geregelten Anschluss 26 verbunden. Am zweiten Bremssteuerventil 3 ist eine zweite Vorsteuerventilgruppe 3a sowie ein zweiter Drucksensor 3b vorgesehen. Entsprechend sind am dritten Bremssteuerventil 4 eine dritte Vorsteuerventilgruppe 4a sowie ein dritter Drucksensor 4b vorgesehen. In Fig. 1 ist das erste Bremssteuerventil 2, das zweite Bremssteuerventil 3, sowie das dritte Bremssteuerventil 4 jeweils als Relaisventil ausgebildet. Im Bremssteuermodul ist ferner eine Prozessoreinheit 5 vorgesehen, ferner sind hier ein Drehratensensor 7 sowie ein Beschleunigungssensor 8 vorgesehen. Die gesamte Elektronik für die Bremssteuerung ist somit im Bremssteuermodul mitverbaut. Alle Komponenten sind in einem gemeinsamen Gehäuse 9 vorgesehen.

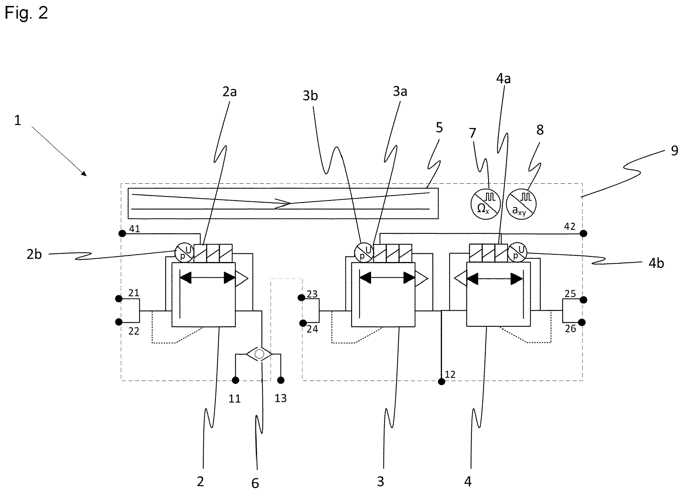

Fig. 2 ist eine ähnliche Darstellung wie Fig. 1, hier ist lediglich am ersten Bremssteuerventil 2 die Versorgung der Druckluft verschieden: Hier sind ein erster Druckluftversorgungs-Anschluss 11 und ein dritter Druckluftversorgungs-Anschluss 13 vorgesehen, welche mit getrennten Druckquellen verbunden werden können. Zwischen dem ersten Druckluftversorgungs-Anschluss 11 und dem dritten Druckluftversorgungs-Anschluss 13 ist ein Druckauswahlventil 6, in diesem Fall ein sogenanntes Select-High-Ventil, vorgesehen. Je nachdem ob im ersten Druckluftversorgungs-Anschluss 11 oder im dritten Druckluftversorgungs-Anschluss 13 der Druck höher ist, wird dieser entsprechende Anschluss mit dem ersten Bremssteuerventil 2 verbunden. Wenn also nun der Druck am ersten Druckluftversorgungs-Anschluss 11 ausfällt, beispielsweise durch ein Leck, kann somit der dritte Druckluftversorgungs-Anschluss 13 das erste Bremssteuerventil 1 mit Druck versorgen, so dass eine Vorderachse eines Fahrzeugs (deren Bremszylinder mit dem ersten geregelten Anschluss 21 sowie dem zweiten geregelten Anschluss 22 verbunden sein können) grundsätzlich bremsbar bleibt. Der dritte Druckluftversorgungs-Anschluss 13 stellt also einen Hilfsbremskreis dar.

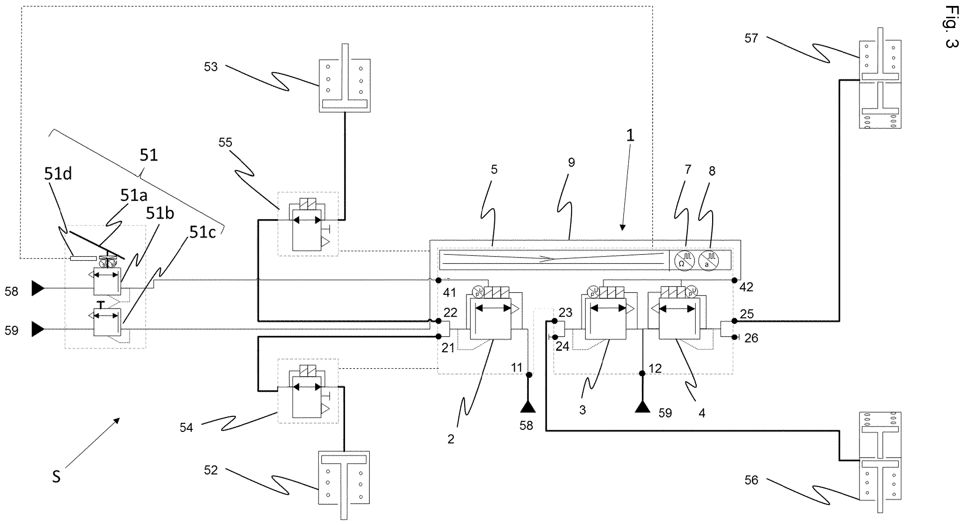

Fig. 3 zeigt eine komplette Architektur eines entsprechenden Bremssystems S. Das Bremssteuermodul 1 ist in den vorherigen Figuren beschrieben, hier ist allerdings gezeigt, dass der erste Druckluftversorgungs-Anschluss 11 mit einer ersten Druckquelle 58 verbunden ist, und der zweite Druckluftversorgungs-Anschluss 12 mit einer zweiten Druckquelle 59. Diese Druckquellen sind jeweils auch mit einem ersten Fußbremsventil 51b und einem zweiten Fußbremsventil 51c eines Fußbremsmoduls 51 verbunden. Ein Pedal 51a steuert den Öffnungszustand des ersten Fußbremsventils 51b und des zweiten Fußbremsventils 51c. Der Ausgang des ersten Fußbremsventils 51b ist mit dem ersten Steueranschluss 41 verbunden, der Ausgang des zweiten Fußbremsventils 51c ist mit dem zweiten Steueranschluss 42 verbunden.

Zusätzlich ist eine Einrichtung 51d zur elektronischen Erfassung des Bremswunsches mit der Prozessoreinheit 5 verbunden.

Beim ersten geregelten Anschluss 21 ist eine Verbindung mit einem ersten ABS-Ventil 54 vorgesehen, dieses wiederum ist mit einem ersten Bremszylinder 52 verbunden, welcher an der Vorderachse links sitzt. Dementsprechend ist der zweite geregelte Anschluss 22 mit einem zweiten ABS-Ventil 55 verbunden, dieses wiederum ist mit einem zweiten Bremszylinder 53 verbunden, welcher an der Vorderachse rechts angebracht ist.

Die beiden ABS-Ventile 54, 55 sind mit der Prozessoreinheit der Bremssteuermoduls 1 verbunden.

Der dritte geregelte Anschluss 23 ist mit einem dritten Bremszylinder 56 verbunden, welcher an der Hinterachse links vorgesehen ist, und der vierte geregelte Anschluss 25 ist mit einem vierten Bremszylinder 57 verbunden, welcher rechts an der Hinterachse vorgesehen ist. Der fünfte geregelte Anschluss 24 sowie der sechste geregelte Anschluss 26 sind in der vorliegenden Konfiguration nicht mit Bremszylindern verbunden. In einem solchen Bremssystem wird stets auf zwei Kreise geachtet, die erste Druckquelle 58 und die zweite Druckquelle 59 sind jeweils nicht miteinander verbunden, so dass bei Ausfall einer der Druckquellen die anderen Druckquellen noch verfügbar sind.

Die vorliegende Erfindung ist nicht auf die dargestellten Ausführungsformen beschränkt. Beispielsweise könnte auch noch ein Lenkwinkelsensor und Drehzahlsensoren in das System eingebunden werden.

Ferner könnte auch noch ein weiterer Kanal im Steuermodul eingebunden werden, beispielsweise ein Modul für die Steuerung des Anhängers. Ferner könnten weitere lokale Raddrehzahlsensoren in das System eingebunden werden, und ferner könnte das Gerät aber in ein redundantes Bremssystem eingebunden werden, in welchem eine unabhängige elektronische Steuerung möglich ist.

### BEZUGSZEICHENLISTE

- 1: Bremssteuermodul
- 2: erstes Bremssteuerventil /Relaisventil
- 2a: erste Vorsteuerventilgruppe
- 2b: erster Drucksensor
- 3: zweites Bremssteuerventil /Relaisventil
- 3a: zweite Vorsteuerventilgruppe
- 3b: zweiter Drucksensor
- 4: drittes Bremssteuerventil /Relaisventil
- 4a: dritte Vorsteuerventilgruppe
- 4b: dritter Drucksensor
- 5: Prozessoreinheit
- 6: Druckauswahlventil / Select-High-Ventil
- 7: Drehratensensor
- 8: Beschleunigungssensor
- 9: Gehäuse

- 11: erster Druckluftversorgungs-Anschluss
- 12: zweiter Druckluftversorgungs-Anschluss
- 13: dritter Druckluftversorgungs-Anschluss

- 21: erster geregelter Anschluss (Vorderachse links)
- 22: zweiter geregelter Anschluss (Vorderachse links)
- 23: dritter geregelter Anschluss (erste Hinterachse links)
- 24: fünfter geregelter Anschluss (zweite Hinterachse links)
- 25: vierter geregelter Anschluss (erste Hinterachse rechts)
- 26: sechster geregelter Anschluss (zweite Hinterachse rechts)

- 41: erster Steueranschluss (Vorderachse)
- 42: zweiter Steueranschluss (Hinterrachse)

- 51: Fußbremsmodul
- 51a: Pedal
- 51b: erstes Fußbremsventil
- 51c: zweites Fußbremsventil
- 51d: Einrichtung zur elektronischen Erfassung des Bremswunsches
- 52: erster Bremszylinder (Vorderachse links)
- 53: zweiter Bremszylinder (Vorderachse rechts)
- 54: erstes ABS-Ventil (Vorderachse links)
- 55: zweites ABS-Ventil (Vorderachse rechts)
- 56: dritter Bremszylinder (Hinterachse links)
- 57: vierter Bremszylinder (Hinterachse rechts)
- 58: erste Druckquelle
- 59: zweite Druckquelle

- S: Bremssystem

## Patentansprüche

1. Bremssteuermodul (1) aufweisend:
ein erstes Bremssteuerventil (2), dessen Ausgang mit einem mindestens einem geregelten Anschluss (21, 22) verbunden ist;
ein zweites Bremssteuerventil (3), dessen Ausgang mit einem dritten geregelten Anschluss (23) verbunden ist;
ein drittes Bremssteuerventil (4), dessen Ausgang mit einem vierten geregelten Anschluss (25) verbunden ist;
eine Prozessoreinheit (5), welche dazu angepasst ist, Bremsdrücke zu regeln und/oder zu beeinflussen;
mindestens einen Steueranschluss (41, 42), welcher dazu angepasst ist,
mindestens eines der Bremssteuerventile (2, 3, 4) anzusteuern;
wobei das erste Bremssteuerventil (2) mit mindestens einem ersten Druckluftversorgungs-Anschluss (11) verbunden ist,
und das zweite Bremssteuerventil (3) und das dritte Bremssteuerventil (4) mit mindestens einem zweiten Druckluftversorgungs-Anschluss (12) verbunden sind.

2. Bremssteuermodul (1) gemäß Anspruch 1, wobei der Ausgang des ersten Bremssteuerventils einen ersten (21) und zweiten (22) geregelten Anschluss aufweist.

3. Bremssteuermodul (1) gemäß Anspruch 1 oder 2, wobei das erste Bremssteuerventil (2) mit einem ersten Steueranschluss (41) verbunden ist,
und das zweite Bremssteuerventil (3) und das dritte Bremssteuerventil (4) mit einem zweiten Steueranschluss (42) verbunden sind.

4. Bremssteuermodul (1) gemäß einem der vorhergehenden Ansprüche, wobei alle Komponenten des Bremssteuermoduls (1) in einem Gehäuse (9) untergebracht sind.

5. Bremssteuermodul (1) gemäß einem der vorhergehenden Ansprüche, wobei das erste Bremssteuerventil (2), das zweite Bremssteuerventil (3) und/oder das dritte Bremssteuerventil (4) jeweils als Relaisventil ausgebildet sind.

6. Bremssteuermodul (1) gemäß einem der Ansprüche 2 bis 5, wobei
der erste geregelte Anschluss (21) dazu angepasst ist, mit einem ersten Bremszylinder (52), welcher links an der Vorderachse eines Fahrzeugs vorgesehen ist, verbunden zu werden, und/oder
der zweite geregelte Anschluss (22) dazu angepasst ist, mit einem zweiten Bremszylinder (53), welcher rechts an der Vorderachse eines Fahrzeugs vorgesehen ist, verbunden zu werden, und/oder
der dritte geregelte Anschluss (23) dazu angepasst ist, mit einem dritten Bremszylinder (56), welcher links an der Hinterachse eines Fahrzeugs vorgesehen ist, verbunden zu werden, und/oder
der vierte geregelte Anschluss (25) dazu angepasst ist, mit einem vierten Bremszylinder (57), welcher rechts an der Hinterachse eines Fahrzeugs vorgesehen ist, verbunden zu werden.

7. Bremssteuermodul (1) gemäß einem der vorhergehenden Ansprüche, ferner einen fünften geregelten Anschluss (24) aufweisend, welcher mit dem Ausgang des zweiten Bremssteuerventil (3) verbunden ist, wobei
der fünfte geregelte Anschluss (24) dazu angepasst ist, mit einem weiteren Bremszylinder, welcher links an einer weiteren Hinterachse eines Fahrzeugs vorgesehen ist, verbunden zu werden, und/oder
ferner einen sechsten geregelten Anschluss (26) aufweisend, welcher mit dem Ausgang des dritten Bremssteuerventil (4) verbunden ist, wobei
der sechste geregelte Anschluss (26) dazu angepasst ist, mit einem weiteren Bremszylinder, welcher rechts an einer weiteren Hinterachse eines Fahrzeugs vorgesehen ist, verbunden zu werden.

8. Bremssteuermodul (1) gemäß einem der vorhergehenden Ansprüche, wobei das erste Bremssteuerventil (2) ein erstes elektrisch betätigte Vorsteuerventilgruppe (2a) aufweist, und/oder das zweite Bremssteuerventil (3) eine zweite elektrisch betätigte-Vorsteuerventilgruppe (3a) aufweist, und/oder das dritte Bremssteuerventil (4) eine dritte elektrisch betätigte Vorsteuerventilgruppe (4a) aufweist.

9. Bremssteuermodul (1) gemäß einem der vorhergehenden Ansprüche, wobei am ersten Bremssteuerventil (2) ein erster Drucksensor (2b) vorgesehen ist, welcher dazu angepasst ist, den durch das erste Bremssteuerventil (2) ausgesteuerten Druck zu messen, und/oder
wobei am zweiten Bremssteuerventil (3) ein zweiter Drucksensor (3b) vorgesehen ist, welcher dazu angepasst ist, den durch das zweite Bremssteuerventil (3) ausgesteuerten Druck zu messen, und/oder
wobei am dritten Bremssteuerventil (4) ein dritter Drucksensor (4b) vorgesehen ist, welcher dazu angepasst ist, den durch das dritte Bremssteuerventil (4) ausgesteuerten Druck zu messen, und/oder
wobei im Bremssteuermodul (1) mindestens ein Drehratensensor (7) und/oder Beschleunigungssensor (8) vorgesehen ist.

10. Bremssteuermodul (1) gemäß einem der vorhergehenden Ansprüche, wobei ferner ein dritter Druckluftversorgungs-Anschluss (13) vorgesehen ist, und der erste Druckluftversorgungs-Anschluss (11) sowie der dritte Druckluftversorgungs-Anschluss (13) über ein Druckauswahlventil (6) mit dem ersten Bremssteuerventil (2) verbunden ist, wobei das Druckauswahlventil (6) vorzugsweise ein Select-High-Ventil ist, das denjenigen Druckluftversorgungs-Anschluss (11, 13) mit dem ersten Bremssteuerventil (2) verbindet, an welchem ein höherer Druck anliegt.

11. Bremssystem (S), aufweisend:
ein Bremssteuermodul (1) gemäß einem der vorhergehenden Ansprüche;
wobei mindestens ein Steueranschluss (41, 42) mit einem Fußbremsmodul (51) verbunden ist;
wobei der erste geregelte Anschluss (21) über ein erstes ABS-Ventil (54) mit einem ersten Bremszylinder (52) verbunden ist;
wobei der zweite geregelte Anschluss (22) über ein zweites ABS-Ventil (55) mit einem ersten Bremszylinder (53) verbunden ist;
wobei der dritte geregelte Anschluss (22) mit einem dritten Bremszylinder (56) verbunden ist;
wobei der vierte geregelte Anschluss (25) mit einem vierten Bremszylinder (57) verbunden ist;
wobei der erste Bremszylinder (52) und der zweite Bremszylinder (53) einer Vorderachse eines Fahrzeugs zugeordnet sind, und
wobei der dritte Bremszylinder (56) und der vierte Bremszylinder (57) einer Hinterachse eines Fahrzeugs zugeordnet sind.
